# EUROPEAN PATENT SPECIFICATION

(11) **EP 4 692 250 B1**
(45) Date of publication and mention of the grant of the patent: **04.11.2026**
(21) Application number: 24192850.6
(22) Date of filing: 05.08.2024
(51) Int. Cl.: C09D 11/101, C09D 11/322, C09D 11/38

(54) **ACTIVE-ENERGY-RAY-CURABLE INKJET INK COMPOSITION**
DURCH AKTIVENERGIESTRAHLUNG HÄRTBARE TINTENSTRAHLTINTENZUSAMMENSETZUNG
COMPOSITION D'ENCRE POUR JET D'ENCRE DURCISSABLE PAR RAYONNEMENT D'ÉNERGIE ACTIVE

(43) Date of publication of application: 11.02.2026
(73) Proprietor: Sakata INX Corporation, Osaka-shi, Osaka 550-0002 (JP)
(72) Inventor: Mizutani, Shinya, Osaka-shi, Osaka (JP); Buriankova, Martina, Osaka-shi, Osaka (JP); Myose, Takuya, Osaka-shi, Osaka (JP)
(74) Representative: Grünecker Patent- und Rechtsanwälte PartG mbB

(56) References cited:
- EP-A1- 4 050 073
- JP-A- 2023 059 023
- US-A1- 20240 190 106
- US-B2- 10 767 068

## Description

### Technical Field

The present invention relates to an active energy ray-curable inkjet ink composition.

### Background Art

Active energy ray-curable inkjet ink compositions are used for printing on a variety of base materials. Inkjet printing is advantageous in small-lot production because no printing plate is required. Furthermore, in the photocurable (typically, ultraviolet curable) ink composition, the organic solvent content can be reduced; thus, there is also an advantage in terms of environmental friendliness in that VOC emissions can be reduced.

In printing with the active energy ray-curable inkjet ink composition, ink droplets are landed on a target printing base material, and each of the ink droplets is cured by irradiation with light, so that a printed layer formed of a cured coating film is formed on the target printing base material. At this time, depending on the material of the target printing base material, the composition of the ink composition, and so forth, the adhesion between the printed layer formed of the cured coating film and a surface of the target printing base material is not sufficiently obtained, in some cases.

In contrast, it is publicly known that in an active energy ray-curable inkjet ink composition containing a compound that has a ring structure and in which its homopolymer has a glass transition temperature (Tg) of 90°C or higher and containing a compound in which its homopolymer has a glass transition temperature (Tg) of -30°C or lower, the incorporation of an amine-modified acrylate oligomer thereinto enables printing even at a carriage speed of 1.8 m/s or more during printing and enables blocking resistance to be improved (Patent Literature 1). Additionally, US 10767068 B2 might be cited as prior art.

### Citation List

### Patent Literature

PTL 1: Japanese Unexamined Patent Application Publication No. 2023-059023

### Summary of Invention

### Technical Problem

An object of the present invention is to provide an active energy ray-curable inkjet ink composition that has excellent dischargeability from an inkjet head, forms a printed layer having excellent adhesion to various base materials, has excellent curability, has no tackiness on its surface after curing, has excellent flexibility when bent together with a base material, has excellent image quality after curing, and has less odor after curing.

### Solution to Problem

The present invention relates to an active energy ray-curable inkjet ink composition described below.
1. An active energy ray-curable inkjet ink composition satisfying the following requirements (A) to (D):
   (A) an amine-modified oligomer is contained in an amount of 1.0% to 20.0% by mass of the total solid content,
   (B) an alicyclic skeleton-containing monofunctional monomer that forms a polymer having a Tg of 10°C to 60°C when polymerized is contained in an amount of 16.0% or more by mass of the total solid content,
   (C) 3-methyl-1,5-pentanediol diacrylate is contained in an amount of 8.0% to 25.0% by mass of the total solid content, and
   (D) acryloylmorpholine is contained in an amount of 3.0% to 15.0% by mass of the total solid content.
2. The active energy ray-curable inkjet ink composition described in 1, in which the amine-modified oligomer is contained in an amount of 2.0% to 15.0% by mass of the total solid content.
3. The active energy ray-curable inkjet ink composition described in 1 or 2, in which the amine-modified oligomer is contained in an amount of 4.0% to 13.0% by mass of the total solid content.
4. The active energy ray-curable inkjet ink composition described in any one of 1 to 3, in which the alicyclic skeleton-containing monofunctional monomer that forms a polymer having a Tg of 10°C to 60°C when polymerized is contained in an amount of 18.0% or more by mass of the total solid content.
5. The active energy ray-curable inkjet ink composition described in any one of 1 to 4, in which 3-methyl-1,5-pentanediol diacrylate is contained in an amount of 10.0% to 20.0% by mass of the total solid content.
6. The active energy ray-curable inkjet ink composition described in any one of 1 to 5, in which acryloylmorpholine is contained in an amount of 5.0% to 10.0% by mass of the total solid content.
7. The active energy ray-curable inkjet ink composition described in any one of 1 to 6, in which the alicyclic skeleton-containing monofunctional monomer that forms a polymer having a Tg of 10°C to 60°C when polymerized is t-butylcyclohexyl acrylate.
8. The active energy ray-curable inkjet ink composition described in any one of 1 to 7, in which benzyl acrylate, tetrahydrofurfuryl acrylate, and isobornyl acrylate are each contained in an amount of 5.0% or less by mass of the total solid content.

### Advantageous Effects of Invention

The active energy ray-curable inkjet ink composition of the present invention satisfies requirements (A) to (D) and thus is comprehensively excellent in LED curability and discharge stability from a head. Furthermore, a printed layer obtained by curing the active energy ray-curable inkjet ink composition has the effects that the printed layer is excellent in adhesion to a target printing base material, flexibility of a printed coating film, and image quality, has no surface tackiness, and has less odor. Description of Embodiments

### [1. Composition of Active Energy Ray-Curable Inkjet Ink Composition]

The active energy ray-curable inkjet ink composition of the present invention (hereinafter, sometimes referred to simply as "ink composition") basically satisfies the following requirements (A) to (D):
(A) An amine-modified oligomer is contained in an amount of 1.0% to 20.0% by mass,
(B) an alicyclic skeleton-containing monofunctional monomer that forms a polymer having a Tg of 10°C to 60°C when polymerized is contained in an amount of 16.0% or more by mass,
(C) 3-methyl-1,5-pentanediol diacrylate is contained in an amount of 8.0% to 25.0% by mass, and
(D) acryloylmorpholine is contained in an amount of 3.0% to 15.0% by mass.

In the present invention, the amount of each component contained is a value when the total solid content of the ink composition is 100% by mass. The total solid content is a total of components other than a solvent that do not remain in the printed layer. However, a reactive solvent that reacts to form a film of the cured ink composition is included in the components constituting the total solid content.

In addition to the above-described components, the ink composition can further optionally contain 1) a pigment, 2) a pigment dispersant, 3) a photopolymerizable compound, 4) a photopolymerization initiator, and 5) any other components. As the active energy rays, known active energy rays, such as ultraviolet rays and electron beams, usable for polymerizing a photopolymerizable compound can be used. When electron beams are used, the ink composition can be free of a photopolymerization initiator.

### [(A) The Amine-Modified Oligomer Is Contained in Amount of 1.0% to 20.0% by Mass of Total Solid Content]

The ink composition contains the amine-modified oligomer that is a photopolymerizable compound in an amount of 1.0% to 20.0% by mass of the total solid content of the ink composition. The amine-modified oligomer is a component that has an amine group and in which an ethylenically unsaturated bond in its molecule is polymerized to increase the molecular weight. The amine-modified oligomer is a component having a relatively high molecular weight before polymerization and thus can impart appropriate viscosity and elasticity to the ink composition. In addition, the amine-modified oligomer has a relatively high polarity and may impart adhesion/adhesiveness to a non-absorbent medium to the ink composition after curing. The amine-modified oligomer can enhance the photocurability of the ink composition and the quality of an image formed by printing.

The amine-modified oligomer is an oligomer having one or more amino groups and one or more photopolymerizable functional groups in its molecule, and is preferably an oligomer having two or more photopolymerizable functional groups (polyfunctional amine-modified oligomer). The photopolymerizable functional group is preferably a (meth)acryloyl group. The amine-modified oligomer is preferably an amine-modified (meth)acrylate oligomer having two or more (meth)acryloyl groups together with one or more amino groups in its molecule. In the present specification, "(meth)acrylate" means "acrylate and/or methacrylate", and "(meth)acrylic acid" means "acrylic acid and/or methacrylic acid".

The amine-modified (meth)acrylate oligomer may be synthesized by the polymerization of a desired monomer, or may be a commercially available product. Examples of the commercially available product include GENOMER 5161 and GENOMER 5275 (RAHN); CN371, CN371NS, CN373, CN383, CN384, CN386, CN501, CN503, CN550, and CN551 (Sartomer Inc.); EBECRYL 80, EBECRYL 81, EBECRYL 83, EBECRYL 7100, EBECRYL 84, and EBECRYL P115 (Daicel-Allnex Ltd.); LAROMER PO 83F, LAROMER PO 84F, Laromer LR 8946, Laromer LR 8956, Laromer LR 8996, and Laromer LR 8894 (BASF); AgiSyn 001, AgiSyn 002, Agisyn 003, and Agisyn 008 (DSM Coating Resins Ltd.); Photomer 4771, Photomer 4775, Photomer 4967, Photomer 5006, Photomer 5096, Photomer 5662, and Photomer 5930 (Cognis); and Doublecure EPD, Doublecure OPD, Doublecure 115, Doublecure 225, Doublecure 645, PolyQ 222, PolyQ 226, PolyQ 224, and PolyQ 101 (Double Bond Chemical Ind. Co., Ltd.).

The viscosity of the amine-modified oligomer is not limited, but in particular, the viscosity at 25°C is preferably 2,000 mPa·s or less in order to set the viscosity of the entire active energy ray-curable inkjet ink composition in an appropriate range.

The amine-modified oligomer content of the ink composition is 1.0% to 20.0% by mass of the total solid content of the ink composition. The content is preferably 2.0% or more by mass, more preferably 4.0% or more by mass, even more preferably 6.0% or more by mass, of the total solid content. The content is preferably 17.0% or less by mass, more preferably 15.0% or less by mass, even more preferably 13.0% or less by mass. An amine-modified oligomer content of less than 1.0% by mass may result in inferior image quality and LED curability. An amine-modified oligomer content of more than 20.0% by mass may result in inferior dischargeability from a head (discharge stability).

### [(B) The Alicyclic Skeleton-Containing Monofunctional Monomer that Forms Polymer Having Tg of 10°C to 60°C When Polymerized Is Contained in Amount of 16.0% or More by Mass of Total Solid Content]

B) Examples of the alicyclic skeleton-containing monofunctional monomer that forms a polymer having a Tg of 10°C to 60°C when polymerized include trimethylcyclohexyl acrylate (TMCHA) (Tg: 52°C), cyclohexyl acrylate (CHA) (Tg: 15°C), cyclohexanedimethanol monoacrylate (Tg: 18°C), and 4-t-butylcyclohexyl acrylate (Tg: 34°C) (referred to as TBCH or TBCHA).

The amount of alicyclic skeleton-containing monofunctional monomer, which forms a polymer having a Tg of 10°C to 60°C when polymerized, contained in the ink composition is 16.0% or more by mass of the total solid content of the ink composition. The amount is preferably 20.0% or more by mass, more preferably 25.0% or more by mass. The amount is preferably 45.0% or less by mass, more preferably 40.0% or less by mass. At less than 16.0% by mass of the total solid content, in particular, adhesion to a poly(ethylene terephthalate) resin is decreased, and flexibility and image quality are deteriorated.

The alicyclic skeleton-containing monofunctional monomer that forms a polymer having a Tg of 10°C to 60°C when polymerized is a compound having a cycloaliphatic moiety composed of carbon in its molecule.

### [(C) 3-Methyl-1,5-Pentanediol Diacrylate Is Contained in Amount of 8.0% to 25.0% by Mass of Total Solid Content]

The ink composition contains 3-methyl-1,5-pentanediol diacrylate (MPDA) in an amount of 8.0% to 25.0% by mass of the total solid content. Thereby, the ink composition has excellent discharge stability from a head. Furthermore, a printed layer obtained by curing the ink composition has the effects that it is excellent in adhesion to a target printing base material, flexibility of a printed coating film, and image quality, and has no surface tackiness. The amount is preferably 9.0% or more by mass, more preferably 10.0% or more by mass, even more preferably 11.0% or more by mass. The amount is preferably 23.0% or less by mass, more preferably 20.0% or less by mass, even more preferably 19.0% or less by mass. When the amount is less than 8.0% by mass, a coating film after printing and curing has tackiness, and furthermore, the image quality after printing is deteriorated. When the amount is more than 25.0% by mass, the adhesion to poly(ethylene terephthalate) is decreased, and the flexibility and image quality are deteriorated.

In addition, in the case where 3-methyl-1,5-pentanediol diacrylate is not contained in an amount of 8.0% to 25.0% by mass of the total solid content and where another polyfunctional polymerizable compound is contained, the effect provided when a predetermined amount of 3-methyl-1,5-pentanediol diacrylate is contained as described above is not provided.

### [(D) Acryloylmorpholine Is Contained in Amount of 3.0% to 15.0% by Mass of Total Solid Content.

The ink composition contains acryloylmorpholine in an amount of 3.0% to 15.0% by mass of the total solid content. The amount is preferably 4.0% or more by mass, more preferably 5.0% or more by mass. The amount is preferably 13.0% or less by mass, more preferably 10.0% or less by mass. When the amount is less than 3.0% by mass, the tackiness of the surface of the coating film and the curability may be deteriorated. When the amount is more than 15.0% by mass, the flexibility and adhesion may be deteriorated.

### <Other Photopolymerizable Compounds>

### [Other Monofunctional Monomers (Excluding Alicyclic Skeleton-Containing Monofunctional Monomer that Forms Polymer Having Tg of 10°C to 60°C When Polymerized, and Acryloylmorpholine)]

Other monofunctional monomers that may be contained in the ink composition may be used alone or in combination of two or more. The monomers may be unsaturated carboxylic acid-based compounds, alkyl (meth)acrylate-based compounds, hydroxy group-containing (meth)acrylate-based compounds, halogen-containing (meth)acrylate-based compounds, ether group-containing (meth)acrylate-based compounds, carboxy group-containing (meth)acrylate-based compounds, amide group-containing monofunctional monomers, other (meth)acrylate-based compounds, styrene-based compounds, N-vinyl-based compounds, allylate-based compounds, or other compounds having one ethylenically unsaturated bond. These monofunctional monomers may be contained within a range that does not impair the effect of the present invention. Alternatively, these monofunctional monomers need not be contained.

Examples of unsaturated carboxylic acid-based compounds include unsaturated carboxylic acids, such as (meth)acrylic acid, itaconic acid, crotonic acid, isocrotonic acid, fumaric acid, and maleic acid, salts thereof, and acid anhydrides thereof.

Examples of alkyl (meth)acrylate-based compounds include methyl (meth)acrylate, ethyl (meth)acrylate, propyl (meth)acrylate, isopropyl (meth)acrylate, n-butyl (meth)acrylate, i-butyl (meth)acrylate, t-butyl acrylate, amyl (meth)acrylate, isoamyl (meth)acrylate, hexyl (meth)acrylate, 2-ethylhexyl (meth)acrylate, octyl (meth)acrylate, decyl (meth)acrylate, dodecyl (meth)acrylate, isooctyl (meth)acrylate, lauryl (meth)acrylate, stearyl (meth)acrylate, isostearyl (meth)acrylate, isodecyl (meth)acrylate, isomyristyl (meth)acrylate, octadecyl (meth)acrylate, dicyclopentanyl (meth)acrylate, tridecyl (meth)acrylate, nonyl (meth)acrylate, hexadecyl (meth)acrylate, myristyl (meth)acrylate, isobornyl (meth)acrylate, cyclohexyl (meth)acrylate, norbornyl (meth)acrylate, dicyclopentenyl (meth)acrylate, dicyclopentenyloxyethyl (meth)acrylate, 1-adamantyl (meth)acrylate, 3,5,5-trimethylcyclohexyl acrylate, and 4-t-butylcyclohexyl (meth)acrylate.

Examples of hydroxy group-containing (meth)acrylate-based compounds include hydroxyalkyl (meth)acrylates, such as 2-hydroxyethyl (meth)acrylate, 2-hydroxypropyl (meth)acrylate, 3-hydroxypropyl (meth)acrylate, 2-hydroxybutyl (meth)acrylate, 4-hydroxybutyl (meth)acrylate, hydroxypentyl (meth)acrylate, 2-hydroxy-3-methoxypropyl (meth)acrylate, 2-hydroxy-3-butoxypropyl (meth)acrylate, diethylene glycol mono(meth)acrylate, triethylene glycol mono(meth)acrylate, polyethylene glycol mono(meth)acrylate, dipropylene glycol mono(meth)acrylate, polypropylene glycol mono(meth)acrylate, 1,6-hexanediol mono(meth)acrylate, and cyclohexanedimethanol mono(meth)acrylate, glycerol mono(meth)acrylate, 2-hydroxy-3-chloropropyl (meth)acrylate, 2-hydroxy-3-phenoxypropyl (meth)acrylate, 2-hydroxy-3-allyloxypropyl (meth)acrylate, 2-(meth)acryloyloxyethyl-2-hydroxypropyl phthalate, (poly)alkylene glycol-modified (meth)acrylates, such as 2-ethylhexyl EO-modified (meth)acrylate, o-phenylphenol EO-modified acrylate, p-cumylphenol EO-modified (meth)acrylate, and nonylphenol EO-modified (meth)acrylate, and 4-hydroxybutyl acrylate glycidyl ether (HBAGE).

Among these, 4-hydroxybutyl (meth)acrylate may be or need not be contained in an amount of 1.0% to 10.0% by mass.

Examples of halogen-containing (meth)acrylate-based compounds include trifluoromethyl (meth)acrylate, 2,2,2-trifluoroethyl (meth)acrylate, 2,2,3,3-tetrafluoropropyl (meth)acrylate, 1H-hexafluoroisopropyl (meth)acrylate, 1H,1H,5H-octafluoropentyl (meth)acrylate, 1H,1H,2H,2H-heptadecafluorodecyl (meth)acrylate, 2,6-dibromo-4-butylphenyl (meth)acrylate, 2,4,6-tribromophenoxyethyl (meth)acrylate, and 2,4,6-tribromophenol 3EO (ethylene oxide) adduct (meth)acrylate.

Examples of ether group-containing (meth)acrylate-based compounds include alkoxy-based and/or phenoxy-based (meth)acrylates, such as 1,3-butylene glycol methyl ether (meth)acrylate, methoxy triethylene glycol (meth)acrylate, methoxy dipropylene glycol (meth)acrylate, methoxy tripropylene glycol (meth)acrylate, methoxy polypropylene glycol (meth)acrylate, ethoxy diethylene glycol (meth)acrylate, ethyl carbitol (meth)acrylate, 2-ethylhexylcarbitol (meth)acrylate, tetrahydrofurfuryl (meth)acrylate, cresyl polyethylene glycol (meth)acrylate, phenoxyethyl (meth)acrylate, p-nonylphenoxyethyl (meth)acrylate, p-nonylphenoxy polyethylene glycol (meth)acrylate, glycidyl (meth)acrylate, phenoxy diethylene glycol (meth)acrylate, phenoxy-polyethylene glycol (meth)acrylate, hexaethylene glycol monophenyl ether mono(meth)acrylate, diethylene glycol monobutyl ether acrylate, dipropylene glycol monomethyl ether (meth)acrylate, 3-methoxybutyl (meth)acrylate, methoxy diethylene glycol (meth)acrylate, methoxy propylene glycol (meth)acrylate, methoxy polyethylene glycol (meth)acrylate (the number of EO repeating unit: 400, 700, or the like), 2-(2-ethoxyethoxy)ethyl (meth)acrylate, 2-ethoxyethyl (meth)acrylate, 2-methoxyethyl (meth)acrylate, 3-methoxybutyl acrylate, ethoxyethyl acrylate, ethoxyethoxyethyl (meth)acrylate, butoxyethyl (meth)acrylate, alkoxylated 2-phenoxyethyl (meth)acrylates (such as ethoxylated 2-phenoxyethyl (meth)acrylate and propoxylated 2-phenoxyethyl (meth)acrylate), alkoxylated nonylphenyl (meth)acrylates (such as ethoxylated (4) nonylphenol acrylate), 2-phenoxyethyl (meth)acrylate, p-cumylphenoxy ethylene glycol (meth)acrylate, methylphenoxyethyl acrylate, ethoxylated succinic acid (meth)acrylate, ethoxylated tribromophenyl acrylate, and ethoxylated nonylphenyl (meth)acrylate.

In particular, phenoxyethyl (meth)acrylate may be or need not be contained in an amount of 1.0% to 15.0% by mass.

Examples of carboxy group-containing (meth)acrylate-based compounds include β-carboxyethyl (meth)acrylate, succinic acid monoacryloyloxyethyl ester, ω-carboxypolycaprolactone mono(meth)acrylate, 2-(meth)acryloyloxyethyl hydrogen phthalate, 2-(meth)acryloyloxypropyl hydrogen phthalate, 2-(meth)acryloyloxypropylhexahydro hydrogen phthalate, and 2-(meth)acryloyloxypropyltetrahydro hydrogen phthalate.

The amide group-containing monofunctional monomer is preferably (meth)acrylamide, more preferably (meth)acrylamide in which two hydrogens on the nitrogen of the amide group (-C(=O)NH₂) are substituted with other substituents (N,N-disubstituted (meth)acrylamide), particularly preferably N,N-disubstituted acrylamide. Examples of N,N-disubstituted (meth)acrylamide include (meth)acryloylmorpholine, N,N-dimethyl(meth)acrylamide, diethyl(meth)acrylamide, N-alkylol (C1 to 5) (meth)acrylamides, such as di(2-hydroxyethyl) (meth)acrylamide, di(3-hydroxypropyl) (meth)acrylamide, and di(4-hydroxybutyl) (meth)acrylamide, and adducts of these N-alkylol (C1 to 5) (meth)acrylamides with 1 to 3 mol of ethylene oxide or propylene oxide,

The amide group-containing monofunctional monomer may be 1) (meth)acrylamide, 2) N-methyl(meth)acrylamide, N-methoxymethyl(meth)acrylamide, N-butoxymethyl(meth)acrylamide, or the like, in which one hydrogen atom on the nitrogen atom in the amide group (-C(=O)NH₂) is substituted with another substituent, or 3) N-vinylpyrrolidone (NVP), N-vinylformamide, or the like.

Examples of the other (meth)acrylate-based compound include benzyl acrylate, N,N-dimethylaminoethyl (meth)acrylate, N,N-dimethylaminopropyl (meth)acrylate, morpholinoethyl (meth)acrylate, trimethylsiloxyethyl (meth)acrylate, diphenyl-2-(meth)acryloyloxyethyl phosphate, 2-(meth)acryloyloxyethyl acid phosphate, caprolactone-modified 2-(meth)acryloyloxyethyl acid phosphate, 2-hydroxy-1-(meth)acryloxy-3-methacryloxypropane, acryloyloxyethyl phthalate, 2-(meth)acryloyloxyethyl-2-hydroxyethyl phthalate, 2-(meth)acryloyloxypropyl phthalate, tricyclodecanemonomethylol (meth)acrylate, a (meth)acrylic acid dimer, diethylaminoethyl (meth)acrylate, 2-(meth)acryloyloxyethyl succinic acid, 2-(meth)acryloyloxyethylhexahydrophthalic acid, 2-ethylhexyl-diglycol (meth)acrylate, aminoethyl (meth)acrylate, ethylcarbitol acrylate, ethyldiglycol acrylate, dimethylaminoethyl acrylate benzyl chloride quaternary salt, tribromophenyl (meth)acrylate, 1,4-cyclohexanedimethanol mono(meth)acrylate, cresol (meth)acrylate, trimethylolpropaneformal (meth)acrylate, neopentyl glycol (meth)acrylic acid benzoic acid ester, (2-methyl-2-ethyl-1,3-dioxolan-4-yl)methyl (meth)acrylate, 1-(meth)acryloylpiperidin-2-one, 2-(meth)acrylic acid-1,4-dioxaspiro[4,5]dec-2-ylmethyl, N-(meth)acryloyloxyethylhexahydrophthalimide, γ-butyrolactone (meth)acrylate, caprolactone-modified tetrahydrofurfuryl acrylate, imide acrylate, vinyl (meth)acrylate, and maleimide.

Phosphate (meth)acrylate may be contained. (Phosphate (meth)acrylate is a compound having both a phosphate group and a (meth)acryloyl group in its molecule. That is, phosphate (meth)acrylate is a compound in which a "functional group containing a (meth)acryloyl group" is introduced into one, two, or three of the three -OH groups of phosphoric acid (P(=O)(OH)₃).

Examples of styrene-based compounds include styrene, vinyl toluene, p-hydroxystyrene, p-chlorostyrene, p-bromostyrene, p-methylstyrene, p-methoxystyrene, p-t-butoxystyrene, p-t-butoxycarbonylstyrene, p-t-butoxycarbonyloxystyrene, 2,4-diphenyl-4-methyl-1-pentene, and divinyl benzene.

Examples of N-vinyl-based compounds include N-vinylpyrrolidone, N-vinylformamide, N-vinylacetamide, N-vinyl-2-caprolactam, N-vinylcarbazole, and vinylmethyloxazolidinone.

Examples of allylate-based compounds include allyl glycidyl ether, diallyl phthalate, triallyl trimellitate, and triallyl isocyanurate.

As compounds having one ethylenically unsaturated bond, "other compounds having one ethylenically unsaturated bond" other than the above-described compounds can be used. Examples of such compounds include vinyl acetate, monochlorovinyl acetate, vinyl benzoate, vinyl pivalate, butyric acid vinyl, vinyl laurate, divinyl adipate, vinyl crotonate, vinyl 2-ethylhexanoate, three-membered ring compounds (such as vinylcyclopropanes, 1-phenyl-2-vinylcyclopropanes, 2-phenyl-3-vinyloxiranes, and 2,3-divinyloxiranes), cyclic ketene acetals (such as 2-methylene-1,3-dioxepane, dioxolanes, 2-methylene-4-phenyl-1,3-dioxepane, 4,7-dimethyl-2-methylene-1,3-dioxepane, and 5,6-benzo-2-methylene-1,3-dioxepane), 2-hydroxyethyl vinyl ether (HEVE), and 4-hydroxybutyl vinyl ether (HBVE).

The other monofunctional monomers contained in the ink composition preferably include a monomer having a (meth)acrylate group. Preferred examples of the monomer having a (meth)acrylate group include isobornyl acrylate, lauryl acrylate, acryloylmorpholine, 4-hydroxybutyl acrylate, ethylcarbitol acrylate, and benzyl acrylate.

When the other monofunctional monomer is contained in an active energy ray-curable inkjet printing ink composition, the proportion of the monofunctional monomer may be 0.1% to 70.0% by mass based on the ink composition. The proportion is preferably 30.0% or more by mass, more preferably 40.0% or more by mass, and preferably 65.0% or less by mass, more preferably 60.0% or less by mass. When the other monofunctional monomer is contained, the proportion of the other monofunctional monomer contained in the active energy ray-curable inkjet printing ink composition is preferably 20.0% or more by mass, more preferably 30.0% or more by mass, and preferably 75.0% or less by mass, more preferably 65.0% or less by mass, based on the total of the photopolymerizable components.

### [Other Polyfunctional Monomers (Excluding Amine-Modified Oligomer and 3-Methyl-1,5-Pentanediol Diacrylate)]

The ink composition may contain, in addition to 3-methyl-1,5-pentanediol diacrylate, a polyfunctional monomer that is a photopolymerizable compound within a range that does not impair the effect of the present invention. One type may be used alone, or two or more types may be used in combination. As the polyfunctional monomer (monomer having two or more ethylenically unsaturated bonds), for example, the following polyfunctional (meth)acrylate-based compounds and vinyl ether group-containing (meth)acrylate-based compounds can be used.

The polyfunctional (meth)acrylate-based compound may be a bifunctional di(meth)acrylate-based compound, a trifunctional tri(meth)acrylate-based compound, or a polyfunctional (meth)acrylate-based compound having more functional groups.

Examples of the di(meth)acrylate compound include ethylene glycol di(meth)acrylate, diethylene glycol di(meth)acrylate, triethylene glycol di(meth)acrylate, polyethylene glycol di(meth)acrylate, propylene glycol di(meth)acrylate, dipropylene glycol di(meth)acrylate, tripropylene glycol di(meth)acrylate, polypropylene glycol di(meth)acrylate, butylene glycol di(meth)acrylate, pentyl glycol di(meth)acrylate, neopentyl glycol di(meth)acrylate, PO-modified neopentyl glycol di(meth)acrylate, hydroxypivalyl hydroxypivalate di(meth)acrylate, hydroxypivalyl hydroxypivalate dicaprolactonate di(meth)acrylate, 1,6-hexanediol di(meth)acrylate, EO-modified 1,6-hexanediol di(meth)acrylate, 1,2-hexanediol di(meth)acrylate, 1,5-hexanediol di(meth)acrylate, 2,5-hexanediol di(meth)acrylate, 1,7-heptanediol di(meth)acrylate, 1,8-octanediol di(meth)acrylate, 1,2-octanediol di(meth)acrylate, 1,9-nonanediol di(meth)acrylate, 1,10-decanediol di(meth)acrylate, 1,2-decanediol di(meth)acrylate, 1,12-dodecanediol di(meth)acrylate, 1,2-dodecanediol di(meth)acrylate, 1,14-tetradecanediol di(meth)acrylate, 1,2-tetradecanediol di(meth)acrylate, 1,16-hexadecanediol di(meth)acrylate, 1,2-hexadecanediol di(meth)acrylate, 2-methyl-2,4-pentanediol di(meth)acrylate, 3-methyl-1,5-pentanediol di(meth)acrylate, 2-methyl-2-propyl-1,3-propanediol di(meth)acrylate, 2,4-dimethyl-2,4-pentanediol di(meth)acrylate, 2,2-diethyl-1,3-propanediol di(meth)acrylate, 2,2,4-trimethyl-1,3-pentanediol di(meth)acrylate, dimethyloloctane di(meth)acrylate, 2-ethyl-1,3-hexanediol di(meth)acrylate, 2,5-dimethyl-2,5-hexanediol di(meth)acrylate, 2-methyl-1,8-octanediol di(meth)acrylate, 2-butyl-2-ethyl-1,3-propanediol di(meth)acrylate, 2,4-diethyl-1,5-pentanediol di(meth)acrylate, tricyclodecanedimethylol di(meth)acrylate, tricyclodecanedimethylol dicaprolactonate di(meth)acrylate, cyclohexanedimethanol di(meth)acrylate, dicyclopentanyl di(meth)acrylate, bisphenol A tetraethylene oxide adduct di(meth)acrylate, bisphenol F tetraethylene oxide adduct di(meth)acrylate, bisphenol S tetraethylene oxide adduct di(meth)acrylate, hydrogenated bisphenol A tetraethylene oxide adduct di(meth)acrylate, hydrogenated bisphenol F tetraethylene oxide adduct di(meth)acrylate, hydrogenated bisphenol A di(meth)acrylate, hydrogenated bisphenol F di(meth)acrylate, bisphenol A tetraethylene oxide adduct dicaprolactonate di(meth)acrylate, bisphenol F tetraethylene oxide adduct dicaprolactonate di(meth)acrylate, and di(meth)acrylates of polyhydric alcohols, such as glycerol, pentaerythritol, diglycerol, ditrimethylolpropane, and dipentaerythritol.

Among these, 1.0% to 10.0% by mass of PO-modified neopentyl glycol di(meth)acrylate and 1.0% to 15.0% by mass of 1,6-hexanediol di(meth)acrylate may be or need not be contained.

Examples of the tri(meth)acrylate-based compound include glycerol tri(meth)acrylate, trimethylolpropane tri(meth)acrylate, trimethylolpropane tricaprolactonate tri(meth)acrylate, trimethylolethane tri(meth)acrylate, trimethylolhexane tri(meth)acrylate, trimethyloloctane tri(meth)acrylate, pentaerythritol tri(meth)acrylate, and their 3EO (ethylene oxide)-modified products, 6EO-modified products, and 9EO-modified products (such as 3EO-modified trimethylolpropane tri(meth)acrylate, 3EO-modified trimethylolethane tri(meth)acrylate, and 3EO-modified trimethylolhexane tri(meth)acrylate).

Examples of tetra- or more functional (meth)acrylate compounds include tetra- or more functional monomers, such as trimethylolpropane tetra(meth)acrylate, pentaerythritol tetra(meth)acrylate, pentaerythritol tetracaprolactonate tetra(meth)acrylate, diglycerol tetra(meth)acrylate, ditrimethylolpropane tetra(meth)acrylate, ditrimethylolpropane tetracaprolactonate tetra(meth)acrylate, ditrimethylolethane tetra(meth)acrylate, ditrimethylolbutane tetra(meth)acrylate, ditrimethylolhexane tetra(meth)acrylate, ditrimethyloloctane tetra(meth)acrylate, dipentaerythritol penta(meth)acrylate, dipentaerythritol hexa(meth)acrylate, tripentaerythritol hexa(meth)acrylate, tripentaerythritol hepta(meth)acrylate, tripentaerythritol octa(meth)acrylate, and tripentaerythritol polyalkylene oxide hepta(meth)acrylate.

Examples of the vinyl ether group-containing (meth)acrylate-based compounds include 2-vinyloxyethyl (meth)acrylate, 3-vinyloxypropyl (meth)acrylate, 1-methyl-2-vinyloxyethyl (meth)acrylate, 2-vinyloxypropyl (meth)acrylate, 4-vinyloxybutyl (meth)acrylate, 1-methyl-3-vinyloxypropyl (meth)acrylate, 1-vinyloxymethylpropyl (meth)acrylate, 2-methyl-3-vinyloxypropyl (meth)acrylate, 3-methyl-3-vinyloxypropyl (meth)acrylate, 1,1-dimethyl-2-vinyloxyethyl (meth)acrylate, 3-vinyloxybutyl (meth)acrylate, 1-methyl-2-vinyloxypropyl (meth)acrylate, 2-vinyloxybutyl (meth)acrylate, 4-vinyloxycyclohexyl (meth)acrylate, 5-vinyloxypentyl (meth)acrylate, 6-vinyloxyhexyl (meth)acrylate, 4-vinyloxymethylcyclohexylmethyl (meth)acrylate, 3-vinyloxymethylcyclohexylmethyl (meth)acrylate, 2-vinyloxymethylcyclohexylmethyl (meth)acrylate, p-vinyloxymethylphenylmethyl (meth)acrylate, m-vinyloxymethylphenylmethyl (meth)acrylate, o-vinyloxymethylphenylmethyl (meth)acrylate, 2-(vinyloxyethoxy)ethyl (meth)acrylate, 2-(vinyloxyisopropoxy)ethyl (meth)acrylate, 2-(vinyloxyethoxy)propyl (meth)acrylate, 2-(vinyloxyethoxy)isopropyl (meth)acrylate, 2-(vinyloxyisopropoxy)propyl (meth)acrylate, 2-(vinyloxyisopropoxy)isopropyl (meth)acrylate, 2-(vinyloxyethoxyethoxy)ethyl (meth)acrylate, 2-(vinyloxyethoxyisopropoxy)ethyl (meth)acrylate, 2-(vinyloxyisopropoxyethoxy)ethyl (meth)acrylate, and 2-(vinyloxyisopropoxyisopropoxy)ethyl (meth)acrylate.

The proportion of the polyfunctional monomer contained in the active energy ray-curable inkjet ink composition is preferably 10.0% or more by mass, more preferably 20.0% or more by mass, and preferably 70.0% or less by mass, more preferably 60.0% or less by mass, based on the total solid content of the ink composition. The proportion of the polyfunctional monomer contained in the active energy ray-curable inkjet ink composition is preferably 15.0% or more by mass, more preferably 25.0% or more by mass, and preferably 80.0% or less by mass, more preferably 70.0% or less by mass, based on the total of the photopolymerizable compounds.

### [Oligomer Other Than Amine-Modified Oligomer]

The ink composition of the present invention can contain an oligomer other than the amine-modified oligomer within a range that does not impair the effect of the present invention, or does not contain an oligomer other than the amine-modified oligomer.

Examples of the oligomer other than the amine-modified oligomer include urethane acrylate oligomers, epoxy acrylate oligomers, and silicone acrylate oligomers.

### [Pigment]

The ink composition may contain a pigment or need not contain a pigment. The pigment is a component added to impart tinting strength, hiding power, and so forth to the ink composition. Examples thereof include coloring pigments, white pigments, and metal powders. Examples of such pigments can include, but are not particularly limited to, the following organic and/or inorganic pigments that have been conventionally used in the ink composition.

Examples of the pigment include organic pigments, such as dye lake pigments, azo-based, benzimidazolone-based, phthalocyanine-based, quinacridone-based, anthraquinone-based, dioxazine-based, indigo-based, thioindigo-based, perylene-based, perinone-based, diketopyrrolopyrrole-based, isoindolinone-based, nitro-based, nitroso-based, flavanthrone-based, quinophthalone-based, pyranthrone-based, and indanthrone-based pigments; and various inorganic pigments.

Among these pigment, preferred examples thereof include yellow pigments, such as disazo yellow (Pigment Yellow 12, Pigment Yellow 13, Pigment Yellow 14, Pigment Yellow 17, and Pigment Yellow 1), Hansa Yellow, Pigment Yellow 150, and Pigment Yellow 155; magenta pigments, such as Brilliant Carmine 6B, Lake Red C, Watching Red, quinacridone, Pigment Red 122, and Pigment Red 254; cyan pigments, such as Phthalocyanine Blue, Phthalocyanine Green, Alkali Blue, and Pigment Blue 15:4; colored pigments (including achromatic colored pigments such as white and black), such as titanium oxide (e.g., Pigment White 6), zinc oxide, iron red, antimony red, cadmium yellow, cobalt blue, iron blue, ultramarine blue, iron black, chrome oxide green, carbon black (e.g., Pigment Black 7), and graphite; and metal powders, such as aluminum paste and bronze powder.

The pigment content of the ink composition varies depending on the type of the pigment and the intended degree of coloring. For example, the pigment content can be, but is not particularly limited to, about 1.0% to 30.0% by mass based on the entire ink composition. When a colored ink composition is prepared, a pigment or dye of another color may be used in combination as a complementary color, or an ink composition of another color may be added.

In the present invention, when the pigment contains carbon black, the carbon black content of the pigment is not particularly limited and can be freely set in the range of more than 0% by mass to 100% by mass based on the entire pigment. For example, the content is 30.0% or more by mass, preferably 50.0% or more by mass, more preferably 80.0% or more by mass, even more preferably 100% by mass.

### [Pigment Dispersant]

The ink composition can contain a pigment dispersant for dispersing the pigment. The pigment dispersant is preferably a polymer-based pigment dispersant, and is preferably a basic group-containing pigment dispersant. Examples of the basic group-containing pigment dispersant include polymeric pigment dispersants, such as basic group-containing polyester-based pigment dispersants, basic group-containing acrylic-based pigment dispersants, basic group-containing urethane-based pigment dispersants, and basic group-containing carbodiimide-based pigment dispersants; and anionic surfactants.

Among these, the polymer-based pigment dispersant can be, but is not particularly limited to, a linear polymer having a block or graft structure and having a moiety containing a basic group having an affinity for pigment at at least one end (at one end or each end) of the main chain. The polymer-based pigment dispersant can contain 2 to 3,000 basic groups in one molecule and can have a number-average molecular weight of 1,000 to 1,000,000.

The pigment dispersant preferably has an amine value of 10 mgKOH/g or more, more preferably 16 mgKOH/g or more, and preferably 100 mgKOH/g or less, more preferably 80 mgKOH/g or less, even more preferably 70 mgKOH/g or less. The amine value refers to the total amount of free base and base, and is expressed in milligrams of potassium hydroxide equivalent to the amount of hydrochloric acid required to neutralize 1 g of a sample.

The ink composition preferably contains two or more pigment dispersants having different amine values, in some cases. That is, when a pigment dispersant having an amine value less than a certain value is combined with a pigment dispersant having an amine value equal to or more than a certain value, the dispersion stability of the pigment of the ink composition can be enhanced. Preferably, a pigment dispersant having an amine value of less than 30 mgKOH/g and a pigment dispersant having an amine value of 30 mgKOH/g or more can be used in combination.

Specific embodiments of the pigment dispersant, preferably a basic group-containing pigment dispersant, include the following embodiments (1) to (17).
(1) A reaction product of an amino group and/or an imino group of a polyamine compound (for example, a poly(lower alkylene amine) such as polyallylamine, polyvinylamine, or polyethylene polyimine) with at least one selected from the group consisting of a polyester, a polyamide, and a polyesteramide having a free carboxy group (see Japanese Unexamined Patent Application Publication No. 2001-59906);
(2) a reaction product of a low-molecular-weight amino compound, such as poly(lower)alkyleneimine or methyliminobispropylamine, with a polyester having a free carboxy group (see Japanese Unexamined Patent Application Publication Nos. 54-37082 and 1-311177);
(3) a reaction product formed by sequentially reacting an isocyanate group of a polyisocyanate compound with an alcohol, such as methoxy polyethylene glycol, or a polyester having one hydroxy group, such as caprolactone polyester, a compound having two or three isocyanate group-reactive functional groups, and an aliphatic or heterocyclic hydrocarbon compound having an isocyanate group-reactive functional group and a tertiary amino group (see Japanese Unexamined Patent Application Publication No. 2-612);
(4) a compound formed by reacting a polymer of an acrylate having an alcoholic hydroxy group with a polyisocyanate compound and a hydrocarbon compound having an amino group;
(5) a reaction product formed by adding a polyether chain to a low-molecular-weight amino compound;
(6) a reaction product formed by reacting a compound having an isocyanate group with a compound having an amino group (see Japanese Unexamined Patent Application Publication No. 4-210220);
(7) a reaction product formed by reacting a polyepoxy compound with a linear polymer having a free carboxy group and an organic amine compound having one secondary amino group (see Japanese Unexamined Patent Application Publication No. 9-87537);
(8) a reaction product of a polycarbonate compound having a functional group that can react with an amino group at one end and a polyamine compound (see Japanese Unexamined Patent Application Publication No. 9-194585);
(9) a copolymer of at least one selected from methacrylic acid esters and acrylic acid esters, such as methyl methacrylate, ethyl methacrylate, propyl methacrylate, butyl methacrylate, stearyl methacrylate, benzyl methacrylate, methyl acrylate, ethyl acrylate, propyl acrylate, butyl acrylate, stearyl acrylate, and benzyl acrylate; at least one basic group-containing polymerizable monomer, such as acrylamide, methacrylamide, N-methylolamide, vinylimidazole, vinylpyridine, and a monomer having an amino group and a polycaprolactone skeleton; and at least one of styrene, styrene derivatives, and other polymerizable monomers (see Japanese Unexamined Patent Application Publication No. 1-164429);
(10) a carbodiimide-based pigment dispersant containing a basic group (see International Publication No. 2004/000950);
(11) a block copolymer composed of a block having a basic group, such as a tertiary amino group or a quaternary ammonium salt, and a block having no functional group (see Japanese Unexamined Patent Application Publication No. 2005-55814);
(12) a pigment dispersant obtained by subjecting polyallylamine to the Michael addition reaction with a polycarbonate compound (see Japanese Unexamined Patent Application Publication No. 9-194585);
(13) a carbodiimide-based compound having at least one polybutadiene chain and at least one basic nitrogen-containing group (see Japanese Unexamined Patent Application Publication No. 2006-257243);
(14) a carbodiimide-based compound having at least one side chain having an amide group and at least one basic nitrogen-containing group in its molecule (see Japanese Unexamined Patent Application Publication No. 2006-176657);
(15) a polyurethane-based compound containing a constitutional unit having an ethylene oxide chain and a propylene oxide chain and containing an amino group quaternized with a quaternizing agent (see Japanese Unexamined Patent Application Publication No. 2009-175613);
(16) A compound obtained by reacting an isocyanate group of an isocyanate compound having an isocyanurate ring in its molecule with an active hydrogen group of a compound having an active hydrogen group and having a carbazole ring and/or an azobenzene skeleton in its molecule, in which the number of carbazole rings and azobenzene skeletons is 15% to 85% of the total of the isocyanate group originating from an isocyanate compound having an isocyanurate ring and a urethane bond and a urea bond formed by the reaction between the isocyanate group and the active hydrogen group in the molecule of the compound (see Japanese Unexamined Patent Application Publication No. 2010-107965);
(17) A graft copolymer in which a polyether or polyester side chain is introduced into an acrylate polymer having an amino group, for example.

Pigment dispersants are also commercially available. Examples of commercially available pigment dispersants include the SOLSPERSE series of Lubrizol, the Disperbyk and BYKJET series of BYK Chemie, the EFKA series of BASF, and the AJISPER series of Ajinomoto Fine-Techno Co., Inc.

Examples of the SOLSPERSE series include SOLSPERSE 11200, SOLSPERSE 13240, SOLSPERSE 13650, SOLSPERSE 13940, SOLSPERSE 16000, SOLSPERSE 17000, SOLSPERSE 18000, SOLSPERSE 20000, SOLSPERSE 24000, SOLSPERSE 24000SC, SOLSPERSE 24000GR, SOLSPERSE 2600, SOLSPERSE 28000, SOLSPERSE 31845, SOLSPERSE 32000, SOLSPERSE 32500, SOLSPERSE 32550, SOLSPERSE 32600, SOLSPERSE 33000, SOLSPERSE 34750, SOLSPERSE 35100, SOLSPERSE 35200, SOLSPERSE 37500, SOLSPERSE 38500, SOLSPERSE 39000, SOLSPERSE 56000, SOLSPERSE 71000, SOLSPERSE 73000, and SOLSPERSE 74000.

Examples of the Disperbyk series include Disperbyk-101, Disperbyk-108, Disperbyk-109, Disperbyk-112, Disperbyk-116, Disperbyk-130, Disperbyk-140, Disperbyk-142, Disperbyk-145, Disperbyk-161, Disperbyk-162, Disperbyk-163, Disperbyk-164, Disperbyk-166, Disperbyk-167, Disperbyk-168, Disperbyk-180, Disperbyk-182, Disperbyk-183, Disperbyk-185, Disperbyk-184, Disperbyk-2000, Disperbyk-2001, Disperbyk-2008, Disperbyk-2020, Disperbyk-2050, Disperbyk-2070, Disperbyk-2150, and Disperbyk-2155.

Examples of the BYKJET series include BYKJET-9131, BYKJET-9132, BYKJET-9133, BYKJET-9142, BYKJET-9150, BYKJET-9151, BYKJET-9152, BYKJET-9170, BYKJET-9171, BYKJET-9175, and BYKJET-9177.

Examples of the EFKA series include EFKA 4008, EFKA 4046, EFKA 4047, EFKA 4015, EFKA 4020, EFKA 4050, EFKA 4055, EFKA 4060, EFKA 4080, EFKA 4300, EFKA 4330, EFKA 4400, EFKA 4401, EFKA 4402, EFKA 4403, EFKA 4500, EFKA 4510, EFKA 4530, EFKA 4800, EFKA PX 4701, and EFKA PX 4703.

Examples of the AJISPER series include AJISPER PB-711, AJISPER PB-821, and AJISPER PB-822.

Among these, examples of a pigment dispersant having an amine value of 30 mgKOH/g or more include SOLSPERSE 24000 (41.6 mgKOH/g), SOLSPERSE 32000 (31.2 mgKOH/g), SOLSPERSE 33000 (43 mgKOH/g), SOLSPERSE 56000 (39 mgKOH/g), SOLSPERSE 71000 (75 mgKOH/g), SOLSPERSE 73000 (80 mgKOH/g), SOLSPERSE 74000 (81 mgKOH/g), Disperbyk-108 (71 mgKOH/g), Disperbyk-180 (94 mgKOH/g), Disperbyk-2008 (66 mgKOH/g), Disperbyk-2050 (31 mgKOH/g), Disperbyk-2155 (48 mgKOH/g), EFKA 4300 (57 mgKOH/g), EFKA 4401 (48 to 52 mgKOH/g), EFKA PX 4701 (40 mgKOH/g), and EFKA PX 4703 (56 mgKOH/g).

Examples of a pigment dispersant having an amine value of less than 30 mgKOH/g include SOLSPERSE 39000 (26 mgKOH/g), Disperbyk-163 (10 mgKOH/g), Disperbyk-168 (11 mgKOH/g), BYKJET-9151 (18 mgKOH/g), BYKJET-9152 (27 mgKOH/g), AJISPER PB-821(11.2 mgKOH/g), and AJISPER PB-822 (18.2 mgKOH/g).

When a pigment dispersant having an amine value of less than 30 mgKOH/g is combined with a pigment dispersant having an amine value of 30 mgKOH/g or more, the pigment dispersant having an amine value of less than 30 mgKOH/g preferably has an amine value of 10 mgKOH/g or more, more preferably has an amine value of 20 mgKOH/g or more. The pigment dispersant having an amine value of 30 mgKOH/g or more preferably has an amine value of 100 mgKOH/g or less, more preferably has an amine value of 80 mgKOH/g or less, even more preferably has an amine value of 70 mgKOH/g or less. The "difference" in the amine value between the pigment dispersant having an amine value of less than 30 mgKOH/g and the pigment dispersant having an amine value of 30 mgKOH/g or more may be 1 mgKOH/g or more.

When the ink composition contains a pigment dispersant, the pigment dispersant content is preferably 10.0 to 100 parts by mass based on 100 parts by mass of the pigment. The pigment dispersant content based on 100 parts by mass of the pigment is more preferably 15.0 parts or more by mass, more preferably 70.0 parts or less by mass, even more preferably 65.0 parts or less by mass, most preferably 60.0 parts or less by mass. The pigment dispersant content based on the entire ink composition is preferably 0.1% or more by mass, more preferably 0.15% or more by mass, even more preferably 0.2% or more by mass, and preferably 4.0% or less by mass, preferably 3.0% or less by mass, more preferably 2.5% or less by mass. When a pigment dispersant (α) having an amine value of less than 30 mgKOH/g and a pigment dispersant (β) having an amine value of 30 mgKOH/g or more are combined, the ratio by mass of the α content and the β content is preferably, but not particularly limited to, in the range of α:β = 10:1 to 10:15.

### [Photopolymerization Initiator]

The ink composition of the present invention may contain a photopolymerization initiator. Examples of the photopolymerization initiator include a benzoin ether-based photopolymerization initiator, an acetophenone-based photopolymerization initiator, an α-ketol-based photopolymerization initiator, an aromatic sulfonyl chloride-based photopolymerization initiator, a photoactive oxime-based photopolymerization initiator, a benzoin-based photopolymerization initiator, a benzyl-based photopolymerization initiator, a benzophenone-based photopolymerization initiator, a ketal-based photopolymerization initiator, a triazine-based photopolymerization initiator, and an acylphosphine oxide-based photopolymerization initiator. Among these, a triazine-based photopolymerization initiator and an acylphosphine oxide-based photopolymerization initiator are preferable from the viewpoint of good photocurability. These photopolymerization initiators may be used alone or in combination of two or more thereof. For example, two acylphosphine oxide-based photopolymerization initiators may be used in combination.

Specific examples of the photopolymerization initiator include bis(2,4,6-trimethylbenzoyl)phenylphosphine oxide, diphenyl(2,4,6-trimethylbenzoyl)phosphine oxide, ethoxy(2,4,6-trimethylbenzoyl)phenylphosphine oxide, benzophenone, diethylthioxanthone, 2-methyl-1-(4-methylthio)phenyl-2-morpholinopropan-1-one, 4-benzoyl-4'-methyldiphenyl sulfide, 1-chloro-4-propoxythioxanthone, isopropylthioxanthone, 2-hydroxy-2-methyl-1-phenylpropan-1-one, 1-hydroxycyclohexyl phenyl ketone, bis-2,6-dimethoxybenzoyl-2,4,4-trimethylpentylphosphine oxide, 1-[4-(2-hydroxyethoxy)phenyl]-2-hydroxy-2-methyl-1-propan-1-one, 2,2-dimethyl-2-hydroxyacetophenone, 2,2-dimethoxy-2-phenylacetophenone, (2,4,6-trimethylbenzyl)diphenylphosphine oxide, and 2-benzyl-2-dimethylamino-1-(morpholinophenyl)butan-1-one.

The photopolymerization initiator content of the ink composition may be set according to a desired curing rate of the photocurable resin composition, and, as a guide, is preferably 1.0% or more by mass, more preferably 3.0% or more by mass, and preferably 18.0% or less by mass, more preferably 16.0% or less by mass, based on the entire ink composition.

### [Other Optional Components]

The ink composition of the present invention may contain other optional components. Examples of the other optional components include a sensitizer, a polymerization inhibitor, a surfactant (leveling agent), a solvent, a surface tension modifier, a non-reactive resin, an ultraviolet absorber, and an antioxidant.

### [Sensitizer]

The ink composition may contain a sensitizer from the viewpoint of improving the photocurability. The sensitizer may be used alone. Alternatively, two or more sensitizers may be used in combination.

Examples of the sensitizer include anthracene-based sensitizers, such as 9,10-dibutoxyanthracene, 9,10-diethoxyanthracene, 9,10-dipropoxyanthracene, and 9,10-bis(2-ethylhexyloxy)anthracene; and thioxanthone-based sensitizers, such as 2,4-diethylthioxanthone, 2,4-diethylthioxanthen-9-one, 2-isopropylthioxanthone, and 4-isopropylthioxanthone. Examples of commercial products of the above-mentioned sensitizers include anthracene-based sensitizers under the product names "DBA" and "DEA" (Kawasaki Kasei Chemicals Ltd.), and thioxanthone-based sensitizers under the product names "DETX" and "ITX" (Lambson Ltd.).

When a sensitizer is contained in the ink composition, from the viewpoint of preventing excessive addition, the sensitizer content is preferably 5.0 parts or less by mass, more preferably 4.0 parts or less by mass, based on 100 parts by mass of the total of the photopolymerizable compounds (including the amine-modified oligomer, the alicyclic skeleton-containing monofunctional monomer that forms a polymer having a Tg of 10°C to 60°C when polymerized, 3-methyl-1,5-pentanediol diacrylate, acryloylmorpholine, and other polymerizable compounds). The total of the photopolymerization initiator content and the sensitizer content is preferably 2.0 to 15.0 parts by mass based on 100 parts by mass of the total of the photopolymerizable compounds.

### [Polymerization Inhibitor]

The ink composition may contain a polymerization inhibitor. The polymerization inhibitor can prevent the occurrence of a polymerization reaction during storage of the ink composition, and can suppress thickening of the ink composition.

Examples of the polymerization inhibitor include phenol-based compounds (including a quinone-based compounds), such as butylhydroxytoluene, tocopherol acetate, nitrosamine-based compounds, benzotriazole, and hindered amines. Among these, quinone-based compounds and nitrosamine-based compounds can be more preferably exemplified.

The polymerization inhibitor content of the active energy ray-curable inkjet ink composition is appropriately set according to the type of the polymerization inhibitor. In the case of a quinone-based compound, the content is about 0.1 to 1.0 part by mass based on 100 parts by mass of the total of the photopolymerizable components.

### [Surfactant (Leveling Agent)]

The ink composition can contain a surfactant as a leveling agent according to the form of the printer head of an inkjet printer used for printing. A known surfactant can be contained without particular limitation. Examples of the surfactant include nonionic surfactants, cationic surfactants, anionic surfactants, and betaine surfactant. Specific examples of the surfactant include silicone-based surfactants, such as polyether-modified silicone oil, polyester-modified polydimethylsiloxane, and polyester-modified methylalkylpolysiloxane, fluorine-based surfactants, and acetylene-based surfactants. The surfactants can be used alone or in combination of two or more.

Examples of silicone-based surfactants include BYK-307, BYK-315N, BYK-331, BYK-333, BYK-347, BYK-348, BYK-349, BYK-345, BYK-377, BYK-378, BYK-3455, and BYK-UV3500 (BYK Chemie).

Examples of fluorine-based surfactants include F-410, F-444, F-553 (DIC Corp.), FS-65, FS-34, FS-35, FS-31, and FS-30 (DuPont de Nemours, Inc.).

Examples of acetylene-based surfactants include Dynol 607, Dynol 609, Olfine E1004, Olfine E1010, Olfine E1020, Olfine PD-001, Olfine PD-002W, Olfine PD-004, Olfine PD-005, Olfine EXP.4001, Olfine EXP.4200, Olfine EXP.4123, Olfine EXP.4300 (Nissin Chemical Industry Co., Ltd.), Surfynol 104E, Surfynol 104H, Surfynol 104A, Surfynol 104BC, Surfynol 104DPM, Surfynol 104Pa, Surfynol 104PG-50, Surfynol 420, Surfynol 440, and Surfynol 465 (EVONIK).

The surfactant content of the ink composition is, based on the entire ink composition, preferably 0.005% or more by mass, more preferably 0.01% or more by mass, from the viewpoint of reducing the surface tension of the ink composition and enhancing the discharge stability from an inkjet head, and is preferably 1.5% or less by mass, more preferably 1.0% or less by mass, from the viewpoint of suppressing bubbles in the ink composition generated during blending and enhancing the discharge stability.

When the surfactant is contained as a leveling agent, the surfactant content is preferably adjusted in such a manner that the surface tension of the ink composition at 25°C is 20 to 36 mN/m. The surfactant content is more preferably 0.1% to 1.5% by mass in the active energy ray-curable inkjet ink composition.

### [Solvent]

The ink composition of the present invention may contain or need not contain water or an organic solvent. The term "organic solvent" as used herein refers to a non-reactive organic solvent that is not a component that forms a coating film by curing, unlike a reactive organic solvent.

### [Physical Properties and Applications of Ink Composition]

The active energy ray-curable inkjet ink composition of the present invention can be applied by printing with an inkjet device, and is excellent in LED curability and discharge stability from a head. Furthermore, the printed layer obtained by curing the active energy ray-curable inkjet ink composition has the effects that it is excellent in adhesion to a target printing base material, the flexibility of the printed film, and the image quality, and has less surface tackiness and odor.

### [Printing Method]

The ink composition of the present invention can be used for printing by an inkjet printer. The system of an inkjet printer that can be used may be, but is not particularly limited to, a line head system (single pass system) or a serial head system (multi-pass system). The inkjet printer may also be a continuous-type inkjet printer. In this case, the conductivity of the ink composition can be adjusted by further adding a conductivity-adding agent.

The ink composition is supplied to a printer head of an inkjet printer, and the ink composition is discharged from the printer head onto a target printing base material. The discharge of the ink composition from the printer head to the base material (printing of an image) may be performed in such a manner that the film thickness of the coating film is, for example, 1 to 60 µm.

The ink composition landed on the base material is cured by exposure to ultraviolet rays, electron beams, or visible light rays emitted from any of light-emitting diodes (LEDs) and various lamps and electrodes. From an environmental point of view, a light-emitting diode (LED) that generates ultraviolet rays having an emission peak wavelength in the range of 350 to 420 nm is preferably used as a light source.

### [Target Printing Base Material]

The target printing base material, which is a printing target, is not particularly limited as long as it is a base material to which a conventionally known active energy ray-curable inkjet ink composition can be applied. Examples of the base material include plastic, paper, capsules, gels, metal foil, glass, wood, and cloth. The active energy ray-curable inkjet ink composition of the present invention can provide the effect that migration of the photopolymerization initiator is less likely to occur, even when the base material composed of any material is used as the printing target. Examples of the plastic constituting the base material include one or more selected from the group consisting of polyester-based polymers (such as poly(ethylene terephthalate) (PET) and poly(ethylene naphthalate)), cellulose-based polymers (such as diacetylcellulose and triacetylcellulose (TAC)), polycarbonate-based polymers, polyacrylic polymers (such as poly(methyl methacrylate)), vinyl chloride-based polymers, such as poly(vinyl chloride) (PVC), polyolefin-based polymers (such as polyethylene, polypropylene, polyolefin polymer having a cyclic or norbornene structure, and ethylene-propylene copolymers), polyamide-based polymers (such as nylon and aromatic polyamide polymers), polystyrene-based polymers (such as polystyrene and acrylonitrile-styrene copolymers), polyimide-based polymers, polysulfone-based polymers, poly(ether sulfone)-based polymers, poly(ether ketone)-based polymers, poly(phenyl sulfide)-based polymer, poly(vinyl alcohol)-based polymers, poly(vinylidene chloride)-based polymers, poly(vinyl butyral)-based polymers, polyarylate-based polymers, polyoxymethylene-based polymers, polyepoxy-based polymers, blends of these polymers, and so forth.

### EXAMPLES

Hereinafter, the present invention will be described in more detail with reference to the examples, but the description of the examples should not be construed to limit the scope of the present invention.

Materials used in the preparation of the ink composition are described below.

### <Pigment>

P.B. 15:4: Pigment Blue 15:4
P.R. 122: Pigment Red 122
P.Y. 150: Pigment Yellow 150
P.Bk. 7: Pigment Black 7 (carbon black)

### <Pigment Dispersant>

Dispersant 1: EFKA PX 4701 (amine value: 40 mgKOH/g) (BASF)
Dispersant 2: SOLSPERSE 56000 (amine value: 39 mgKOH/g) (Lubrizol)
Dispersant 3: SOLSPERSE 24000 (amine value: 24 mgKOH/g) (Lubrizol)
Dispersant 4: BYKJET-9151 (amine value: 18 mgKOH/g) (BYK Chemie)
Amine-modified oligomer: Agisyn 008 (DSM Coating Resin Ltd.)
TMCHA: 3,3,5-trimethylcyclohexyl acrylate
CHA: cyclohexyl acrylate
MPDA: 3-methyl-1,5-pentanediol diacrylate
(EO)TMPTA: ethoxylated trimethylolpropane triacrylate

### <Photopolymerization Initiator>

TPO: diphenyl(2,4,6-trimethylbenzoyl)phosphine oxide
TPO-L: ethoxy(2,4,6-trimethylbenzoyl)phenylphosphine oxide
DETX: 2,4-diethylthioxanthone

### <Surfactant>

BYK-377: silicone-based surfactant (BYK Chemie)

### <Polymerization Inhibitor>

MEHQ: hydroquinone monomethyl ether

Ink compositions in examples and comparative examples were prepared so as to have the composition formulations given in Tables 1, 2, 3, and 4. Specifically, a composition mixture containing a pigment and a pigment dispersant was stirred to prepare a pigment dispersion. A monomer, an oligomer, a photopolymerization initiator, and so forth were added to the resulting pigment dispersion, and the mixture was stirred to prepare an ink composition.

The ink compositions prepared in each of the examples and comparative examples were evaluated with respect to the following items, and the evaluation results are presented in Tables 1, 2, 3, and 4.

### (Dischargeability from Head)

An inkjet recording device equipped with an inkjet nozzle and each ultraviolet-curable inkjet printing ink composition were placed in an atmosphere with a temperature of 25°C for 24 hours, thereby bringing the temperature of the inkjet recording device and the ultraviolet-curable inkjet printing ink composition to 25°C. Thereafter, the ultraviolet-curable inkjet printing ink composition was continuously discharged onto poly(vinyl chloride) (PVC) for 1 minute at 25°C, and then the discharge stability from the head was evaluated according to the following evaluation criteria.
o: The ink composition was stably discharged without print disturbance.
Δ: The ink composition was discharged almost stably, although there was some print disturbance.
×: Printing was disturbed, or the ink composition was not stably discharged.

### (LED Curability)

An inkjet recording device and each ultraviolet-curable inkjet printing ink composition were placed in an atmosphere with a temperature of 25°C for 24 hours, thereby bringing the temperature of the inkjet recording device and the ultraviolet-curable inkjet printing ink composition to 25°C. Thereafter, continuous printing was performed with the ultraviolet-curable inkjet printing ink composition on a poly(vinyl chloride) (PVC) sheet at 25°C. Then the ink composition was cured with a UV-LED lamp manufactured by Phoseon Technology at a cumulative UV ray quantity of 180 mJ/cm² while maintaining a distance of 2 cm between the lamp and the ink-applied surface. The resulting cured coating film was rubbed with a cotton swab, and the curability was evaluated on the basis of the degree of removal of the coating film, the degree of removal being visually determined according to the following evaluation criteria.
∘: No removal was observed.
×: Removal was observed.

### (Adhesion)

The ink composition prepared in each of the examples and comparative examples was applied to a surface of PVC (a poly(vinyl chloride) sheet, product name: PVC80-P-11k White, manufactured by Lintec Corporation), a banner (a poly(vinyl chloride)-coated polyester fabric (having a surface structure reflecting the irregularities of the fabric, unlike the poly(vinyl chloride) sheet)), PET (poly(ethylene terephthalate), product name: E5100 (manufactured by Toyobo Co., Ltd.)), and coated paper (product name: OK Top Coat, manufactured by Oji Paper Co., Ltd.) with a commercially available inkjet printer, and irradiated with ultraviolet rays to produce a cured coating film. The cured coating film formed on the base material was cross-cut with a cutter knife to form 100 square pieces of the cured coating film. A cellophane tape (Cellotape (registered trademark), Nichiban Co., Ltd.) was attached to the cut area and then peeled off. The evaluation was made by counting the number of square pieces remaining on the base material without adhering to the cellophane tape and peeling off. The number of squares obtained by cross-cutting was indicated in the denominator, and the number of unpeeled squares was indicated in the numerator.

In Table 1, "100/100" indicates that none of the pieces was peeled off, and all the pieces remained on the base material, which means that the adhesion was good.

### (Flexibility)

The ultraviolet-curable inkjet printing ink composition was applied by printing on a poly(ethylene terephthalate) (PET) sheet with an inkjet recording device and irradiated with ultraviolet rays to form a cured coating film. The printed sample was folded through 180°, and the evaluation was made by visual observation according to the following evaluation criteria.
o: No line cracks or microcracks were generated in the coating film at the time of folding.
Δ: Microcracks were generated at the time of folding.
×: Line cracks (long and large cracks in a folded portion at the time of folding) were generated at the time of folding.

### (Image Quality)

A solid image was formed by printing on a surface of a coated paper (PA-Tl 8LK Blue (manufactured by Lintec Corporation)) using an inkjet recording device with the ultraviolet-curable inkjet printing ink composition prepared in each of the examples and comparative examples, and then irradiated with ultraviolet rays to form a cured coating film. The degree of filling of the solid portion of the resulting cured coating film on the printed matter was visually evaluated according to the following evaluation criteria.

### Evaluation criteria

o: The solid portion is completely filled, and there is almost no streak feeling.
×: Streaks are noticeable throughout

### (Surface Tackiness)

The ultraviolet-curable inkjet printing ink composition prepared in each of the examples and comparative examples was applied to the respective surfaces of two poly(ethylene terephthalate) (PET) films with a bar coater No. 4 and irradiated with ultraviolet rays to form cured coating films.

The resulting cured coating films on the surfaces of the two poly(ethylene terephthalate) (PET) films were temporarily superposed on each other, and the films were manually peeled off after 30 seconds. The degree of adhesion was evaluated according to the following evaluation criteria based on the feeling felt by the hands when the films were peeled off.
∘: No tackiness is observed.
×: Tackiness is observed.

### (Odor of Coating Film)

The ultraviolet-curable inkjet printing ink composition prepared in each of the examples and comparative examples was applied to a surface of poly(vinyl chloride) (PVC) with a bar coater No. 6 and irradiated with ultraviolet rays to form a cured coating film.

The resulting cured coating film was cut into 8 cm × 12 cm pieces. Immediately after the pieces were placed in a 24 cm × 34 cm zippered bag that can be freely sealed and opened, the bag was closed at 25°C for 1 hour and then opened. The odor at the opening portion immediately after opening was smelled and evaluated according to the following evaluation criteria.
∘: No odor is perceived.
Δ: Slight odor is perceived.
×: Moderate odor is perceived.

The same evaluation was performed by 10 persons, and the result evaluated by the largest number of persons was taken as the result of this evaluation of the odor of the coating film.

**[Table 1]**

| | | | Example | | | | | | | |
|---|---|---|---|---|---|---|---|---|---|---|
| | | | 1 | 2 | 3 | 4 | 5 | 6 | 7 | 8 |
| Pigment | P.B.15:4 | | 2.28% | 2.28% | 2.28% | 2.28% | 2.28% | 2.28% | 2.28% | 2.28% |
| | P.R.122 | | | | | | | | | |
| | P.Y.150 | | | | | | | | | |
| | P.Bk.7 | | | | | | | | | |
| Pigment dispersant | Dispersant 1 | | | | | | | | | |
| | Dispersant 2 | | | | | | | | | |
| | Dispersant 3 | | 0.46% | 0.46% | 0.46% | 0.46% | 0.46% | 0.46% | 0.46% | 0.46% |
| | Dispersant 4 | | | | | | | | | |
| Requirement A | Amine-modified oligomer | | 7.00% | 7.00% | 7.00% | 2.00% | 15.00% | 7.00% | 7.00% | 7.00% |
| Requirement B | TMCHA | | | | | | | | | |
| | CHA | | | | | | | | | |
| | 1,4-Cyclohexanedimethanol monoacrylate | | | | | | | | | |
| | t-Butylcyclohexyl acrylate | | 30.16% | 33.36% | 23.36% | 35.16% | 22.16% | 32.36% | 23.36% | 33.36% |
| Requirement C | MPDA | | 13.20% | 10.00% | 20.00% | 13.20% | 13.20% | 13.20% | 13.20% | 13.20% |
| Requirement D | Acryloylmorpholine | | 6.00% | 6.00% | 6.00% | 6.00% | 6.00% | 3.80% | 12.80% | 6.80% |
| Polymerization component other than A to D | Phenoxyethyl acrylate | | 10.00% | 10.00% | 10.00% | 10.00% | 10.00% | 10.00% | 10.00% | 10.00% |
| | 4-Hydroxybutyl acrylate | | 5.00% | 5.00% | 5.00% | 5.00% | 5.00% | 5.00% | 5.00% | 5.00% |
| | (PO)neopentyl glycol diacrylate | | 6.40% | 6.40% | 6.40% | 6.40% | 6.40% | 6.40% | 6.40% | 6.40% |
| | 1,6-Hexanediol diacrylate | | 4.00% | 4.00% | 4.00% | 4.00% | 4.00% | 4.00% | 4.00% | |
| | Benzyl acrylate | | | | | | | | | |
| | Tetrahydrofurfuryl acrylate | | | | | | | | | |
| | Isobornyl acrylate | | | | | | | | | |
| | Dipropylene glycol diacrylate | | | | | | | | | |
| | Neopentyl glycol diacrylate | | | | | | | | | |
| | (EO)TMPTA | | | | | | | | | |
| Others | TPO(Polymerization initiator) | | 12.00% | 12.00% | 12.00% | 12.00% | 12.00% | 12.00% | 12.00% | 12.00% |
| | TPO-L(Polymerization initiator) | | | | | | | | | |
| | DETX(Sensitizer) | | 2.00% | 2.00% | 2.00% | 2.00% | 2.00% | 2.00% | 2.00% | 2.00% |
| | MEHQ(Polymerization inhibitor) | | 1.00% | 1.00% | 1.00% | 1.00% | 1.00% | 1.00% | 1.00% | 1.00% |
| | BYK-377(Leveling agent) | | 0.50% | 0.50% | 0.50% | 0.50% | 0.50% | 0.50% | 0.50% | 0.50% |
| Total | | | 100.00% | | | | | | | |
| Evaluation result | Dischargeability from head | Discharge stability | ○ | ○ | ○ | ○ | ○ | ○ | ○ | ○ |
| | LED curability | PVC | ○ | ○ | ○ | ○ | ○ | ○ | ○ | ○ |
| | Adhesion | PVC | 100/100 | | | | | | | |
| | | Banner | 100/100 | | | | | | | |
| | | PET | 100/100 | | | | | | | |
| | Flexibility | PET | ○ | ○ | ○ | ○ | ○ | ○ | ○ | ○ |
| | Image quality | Coated paper | ○ | ○ | ○ | ○ | ○ | ○ | ○ | ○ |
| | Surface tackiness | PET | ○ | ○ | ○ | ○ | ○ | ○ | ○ | ○ |
| | Odor of coating film | PVC | ○ | ○ | ○ | ○ | ○ | ○ | ○ | ○ |

**[Table 2]**

| | | | Example | | | | | | | |
|---|---|---|---|---|---|---|---|---|---|---|
| | | | 9 | 10 | 11 | 12 | 13 | 14 | 15 | 16 |
| Pigment | P.B.15:4 | | 2.28% | 2.28% | 2.28% | 2.28% | 2.28% | 2.28% | 2.28% | 2.28% |
| | P.R.122 | | | | | | | | | |
| | P.Y.150 | | | | | | | | | |
| | P.Bk.7 | | | | | | | | | |
| Pigment dispersant | Dispersant 1 | | | | | | | | | |
| | Dispersant 2 | | | | | | | | | |
| | Dispersant 3 | | 0.46% | 0.46% | 0.46% | 0.46% | 0.46% | 0.46% | 0.46% | 0.46% |
| | Dispersant 4 | | | | | | | | | |
| Requirement A | Amine-modified oligomer | | 7.00% | 7.00% | 7.00% | 7.00% | 7.00% | 7.00% | 7.00% | 7.00% |
| Requirement B | TMCHA | | | | 20.00% | | | | | |
| | CHA | | | | | 20.00% | | | | |
| | 1,4-Cyclohexanedimethanol monoacrylate | | | | | | 20.00% | | | |
| | t-Butylcyclohexyl acrylate | | 35.76% | 34.36% | 10.16% | 10.16% | 10.16% | 35.36% | 27.36% | 29.36% |
| Requirement C | MPDA | | 13.20% | 13.20% | 13.20% | 13.20% | 13.20% | 13.20% | 13.20% | 13.20% |
| Requirement D | Acryloylmorpholine | | 6.80% | 6.80% | 6.00% | 6.00% | 6.00% | 6.80% | 6.80% | 6.80% |
| Polymerization component other than A to D | Phenoxyethyl acrylate | | 10.00% | 10.00% | 10.00% | 10.00% | 10.00% | 10.00% | 10.00% | 10.00% |
| | 4-Hydroxybutyl acrylate | | 5.00% | | 5.00% | 5.00% | 5.00% | 5.00% | 5.00% | 5.00% |
| | (PO)neopentyl glycol diacrylate | | | 6.40% | 6.40% | 6.40% | 6.40% | 6.40% | 6.40% | 6.40% |
| | 1,6-Hexanediol diacrylate | | 4.00% | 4.00% | 4.00% | 4.00% | 4.00% | 4.00% | 4.00% | 4.00% |
| | Benzyl acrylate | | | | | | | | | |
| | Tetrahydrofurfuryl acrylate | | | | | | | | | |
| | Isobornyl acrylate | | | | | | | | | |
| | Dipropylene glycol diacrylate | | | | | | | | | |
| | Neopentyl glycol diacrylate | | | | | | | | | |
| | (EO)TMPTA | | | | | | | | | |
| Others | TPO(Polymerization initiator) | | 12.00% | 12.00% | 12.00% | 12.00% | 12.00% | 6.00% | 14.00% | |
| | TPO-L(Polymerization initiator) | | | | | | | | | 12.00% |
| | DETX(Sensitizer) | | 2.00% | 2.00% | 2.00% | 2.00% | 2.00% | 2.00% | 2.00% | 2.00% |
| | MEHQ(Polymerization inhibitor) | | 1.00% | 1.00% | 1.00% | 1.00% | 1.00% | 1.00% | 1.00% | 1.00% |
| | BYK-377(Leveling agent) | | 0.50% | 0.50% | 0.50% | 0.50% | 0.50% | 0.50% | 0.50% | 0.50% |
| Total | | | 100.00% | | | | | | | |
| Evaluation result | Dischargeability from head | Discharge stability | ○ | ○ | ○ | ○ | ○ | ○ | ○ | ○ |
| | LED curability | PVC | ○ | ○ | ○ | ○ | ○ | ○ | ○ | ○ |
| | Adhesion | PVC | 100/100 | | | | | | | |
| | | Banner | 100/100 | | | | | | | |
| | | PET | 100/100 | | | | | | | |
| | Flexibility | PET | ○ | ○ | ○ | ○ | ○ | ○ | ○ | ○ |
| | Image quality | Coated paper | ○ | ○ | ○ | ○ | ○ | ○ | ○ | ○ |
| | Surface tackiness | PET | ○ | ○ | ○ | ○ | ○ | ○ | ○ | ○ |
| | Odor of coating film | PVC | ○ | ○ | ○ | ○ | ○ | ○ | ○ | ○ |

**[Table 3]**

| | | | Example | | | | | | | | |
|---|---|---|---|---|---|---|---|---|---|---|---|
| | | | 17 | 18 | 19 | 20 | 21 | 22 | 23 | 24 | 25 |
| Pigment | P.B.15:4 | | | | | 2.28% | 2.28% | 2.28% | 2.28% | 2.28% | 2.28% |
| | P.R.122 | | 3.75% | | | | | | | | |
| | P.Y.150 | | | 1.97% | | | | | | | |
| | P.Bk.7 | | | | 2.20% | | | | | | |
| Pigment dispersant | Dispersant 1 | | | 0.30% | | | | | | | |
| | Dispersant 2 | | | 0.78% | | | | | | | |
| | Dispersant 3 | | | | | 0.46% | 0.46% | 0.46% | 0.46% | 0.46% | 0.46% |
| | Dispersant 4 | | 1.13% | | 0.66% | | | | | | |
| Requirement A | Amine-modified oligomer | | 5.00% | 8.00% | 7.00% | 7.00% | 7.00% | 7.00% | 7.00% | 7.00% | 7.00% |
| Requirement B | TMCHA | | | | | | | | | | |
| | CHA | | | | | | | | | | |
| | 1,4-Cyclohexanedimethanol monoacrylate | | | | | | | | | | |
| | t-Butylcyclohexyl acrylate | | 19.64% | 36.09% | 29.00% | 25.16% | 25.16% | 25.16% | 20.16% | 20.16% | 20.16% |
| Requirement C | MPDA | | 13.20% | 10.20% | 15.50% | 13.20% | 13.20% | 13.20% | 13.20% | 13.20% | 13.20% |
| Requirement D | Acryloylmorpholine | | 6.80% | 6.80% | 6.80% | 6.00% | 6.00% | 6.00% | 6.00% | 6.00% | 6.00% |
| Polymerization component other than A to D | Phenoxyethyl acrylate | | 10.00% | 8.00% | 8.00% | 10.00% | 10.00% | 10.00% | 10.00% | 10.00% | 10.00% |
| | 4-Hydroxybutyl acrylate | | 10.00% | | | 5.00% | 5.00% | 5.00% | 5.00% | 5.00% | 5.00% |
| | (PO)neopentyl glycol diacrylate | | | 6.80% | 6.80% | 6.40% | 6.40% | 6.40% | 6.40% | 6.40% | 6.40% |
| | 1,6-Hexanediol diacrylate | | 13.88% | 6.56% | 5.54% | 4.00% | 4.00% | 4.00% | 4.00% | 4.00% | 4.00% |
| | Benzyl acrylate | | | | | 5.00% | | | 10.00% | | |
| | Tetrahydrofurfuryl acrylate | | | | | | 5.00% | | | 10.00% | |
| | Isobornyl acrylate | | | | | | | 5.00% | | | 10.00% |
| | Dipropylene glycol diacrylate | | | | | | | | | | |
| | Neopentyl glycol diacrylate | | | | | | | | | | |
| | (EO)TMPTA | | | | | | | | | | |
| Others | TPO(Polymerization initiator) | | 12.00% | 8.00% | 12.00% | 12.00% | 12.00% | 12.00% | 12.00% | 12.00% | 12.00% |
| | TPO-L(Polvmerization initiator) | | | | | | | | | | |
| | DETX(Sensitizer) | | 2.10% | 4.00% | 4.00% | 2.00% | 2.00% | 2.00% | 2.00% | 2.00% | 2.00% |
| | MEHQ(Polymerization inhibitor) | | 2.00% | 2.00% | 2.00% | 1.00% | 1.00% | 1.00% | 1.00% | 1.00% | 1.00% |
| | BYK-377(Leveling agent) | | 0.50% | 0.50% | 0.50% | 0.50% | 0.50% | 0.50% | 0.50% | 0.50% | 0.50% |
| Total | | | 100.00% | | | | | | | | |
| Evaluation result | Dischargeability from head | Discharge stability | ○ | ○ | ○ | ○ | ○ | ○ | ○ | ○ | ○ |
| | LED curability | PVC | ○ | ○ | ○ | ○ | ○ | ○ | ○ | ○ | ○ |
| | Adhesion | PVC | 100/100 | | | | | | | | |
| | | Banner | 100/100 | | | | | | | | |
| | | PET | 100/100 | | | | | | | | |
| | Flexibility | PET | ○ | ○ | ○ | ○ | ○ | ○ | ○ | ○ | ○ |
| | Image quality | Coated paper | ○ | ○ | ○ | ○ | ○ | ○ | ○ | ○ | ○ |
| | Surface tackiness | PET | ○ | ○ | ○ | ○ | ○ | ○ | ○ | ○ | ○ |
| | Odor of coating film | PVC | ○ | ○ | ○ | ○ | ○ | ○ | Δ | Δ | Δ |

**[Table 4]**

| | | | Comparative example | | | | | | |
|---|---|---|---|---|---|---|---|---|---|
| | | | 1 | 2 | 3 | 4 | 5 | 6 | 7 |
| Pigment | P.B.15:4 | | 2.28% | 2.28% | 2.28% | 2.28% | 2.28% | 2.28% | 2.28% |
| | P.R.122 | | | | | | | | |
| | P.Y.150 | | | | | | | | |
| | P.Bk.7 | | | | | | | | |
| Pigment dispersant | Dispersant 1 | | | | | | | | |
| | Dispersant 2 | | | | | | | | |
| | Dispersant 3 | | 0.46% | 0.46% | 0.46% | 0.46% | 0.46% | 0.46% | 0.46% |
| | Dispersant 4 | | | | | | | | |
| Requirement A | Amine-modified oligomer | | 7.00% | 7.00% | 7.00% | 7.00% | 7.00% | 0.50% | 25.00% |
| Requirement B | TMCHA | | | | | | | | |
| | CHA | | | | | | | | |
| | 1,4-Cyclohexanedimethanol monoacrylate | | | | | | | | |
| | t-Butylcyclohexyl acrylate | | 37.26% | 12.26% | 30.16% | 30.16% | 30.16% | 36.66% | 12.16% |
| Requirement C | MPDA | | 5.80% | 30.80% | | | | 13.20% | 13.20% |
| Requirement D | Acryloylmorpholine | | 6.00% | 6.00% | 6.00% | 6.00% | 6.00% | 6.00% | 6.00% |
| Polymerization component other than A to D | Phenoxyethyl acrylate | | 10.00% | 10.00% | 10.00% | 10.00% | 10.00% | 10.00% | 10.00% |
| | 4-Hydroxybutyl acrylate | | 5.00% | 5.00% | 5.00% | 5.00% | 5.00% | 5.00% | 5.00% |
| | (PO)neopentyl glycol diacrylate | | 6.40% | 6.40% | 6.40% | 6.40% | 6.40% | 6.40% | 6.40% |
| | 1,6-Hexanediol diacrylate | | 4.30% | 4.30% | 4.00% | 4.00% | 4.00% | 4.00% | 4.00% |
| | Benzyl acrylate | | | | | | | | |
| | Tetrahydrofurfuryl acrylate | | | | | | | | |
| | Isobornyl acrylate | | | | | | | | |
| | Dipropylene glycol diacrylate | | | | 13.20% | | | | |
| | Neopentyl glycol diacrylate | | | | | 13.20% | | | |
| | (EO)TMPTA | | | | | | 13.20% | | |
| Others | TPO(Polymerization initiator) | | 12.00% | 12.00% | 12.00% | 12.00% | 12.00% | 12.00% | 12.00% |
| | TPO-L(Polymerization initiator) | | | | | | | | |
| | DETX(Sensitizer) | | 2.00% | 2.00% | 2.00% | 2.00% | 2.00% | 2.00% | 2.00% |
| | MEHQ(Polymerization inhibitor) | | 1.00% | 1.00% | 1.00% | 1.00% | 1.00% | 1.00% | 1.00% |
| | BYK-377(Leveling agent) | | 0.50% | 0.50% | 0.50% | 0.50% | 0.50% | 0.50% | 0.50% |
| Total | | | 100.00% | | | | | | |
| Evaluation result | Dischargeability from head | Discharge stability | ○ | ○ | × | × | × | ○ | × |
| | LED curability | PVC | ○ | ○ | ○ | ○ | ○ | × | ○ |
| | Adhesion | PVC | 100/100 | 95/100 | 100/100 | | | | |
| | | Banner | 100/100 | 80/100 | 100/100 | | | | |
| | | PET | 100/100 | 10/100 | 100/100 | | | | |
| | Flexibility | PET | ○ | × | ○ | ○ | ○ | ○ | ○ |
| | Image quality | Coated paper | × | × | ○ | ○ | ○ | × | ○ |
| | Surface tackiness | PET | × | ○ | ○ | ○ | ○ | ○ | ○ |
| | Odor of coating film | PVC | ○ | ○ | ○ | × | ○ | ○ | ○ |

According to each of the examples described in Tables 1 to 3, it was possible to obtain the active energy ray-curable inkjet ink composition having excellent dischargeability from the head and LED curability. In addition, it was possible to obtain the coating film having excellent adhesion, flexibility, and image quality, having no surface tackiness, and having less odor of the coating film. However, in each of Examples 20 to 22, when a monofunctional acrylate to be an odor source, such as benzyl acrylate, tetrahydrofurfuryl acrylate, or isobornyl acrylate was contained in an amount of 5% by mass, the result was that no odor was perceived. In each of Examples 23 to 25, at a monofunctional acrylate content of 10% by mass, the result was that slight odor was perceived.

In contrast, in the comparative examples described in Table 4, some of the active energy ray-curable inkjet ink compositions were inferior in the dischargeability from the head or LED curability. In addition, some of the coating films were inferior in the adhesion, flexibility, or image quality, or had surface tackiness or the odor of the coating film.

### Industrial Applicability

According to an active energy ray-curable inkjet ink composition of the present invention, it is possible to obtain an active energy ray-curable inkjet ink composition having excellent dischargeability from the head and LED curability. In addition, it is possible to obtain a coating film having excellent adhesion, flexibility, and image quality, having no surface tackiness, and having less odor of the coating film, regardless of the type of target printing base material.

## Claims

1. An active energy ray-curable inkjet ink composition satisfying the following requirements (A) to (D):
(A) an amine-modified oligomer is contained in an amount of 1.0% to 20.0% by mass of a total solid content,
(B) an alicyclic skeleton-containing monofunctional monomer that forms a polymer having a Tg of 10°C to 60°C when polymerized is contained in an amount of 16.0% or more by mass of the total solid content,
(C) 3-methyl-1,5-pentanediol diacrylate is contained in an amount of 8.0% to 25.0% by mass of the total solid content, and
(D) acryloylmorpholine is contained in an amount of 3.0% to 15.0% by mass of the total solid content.

2. The active energy ray-curable inkjet ink composition according to Claim 1, wherein the amine-modified oligomer is contained in an amount of 2.0% to 15.0% by mass of the total solid content.

3. The active energy ray-curable inkjet ink composition according to Claim 1 or 2, wherein the amine-modified oligomer is contained in an amount of 4.0% to 13.0% by mass of the total solid content.

4. The active energy ray-curable inkjet ink composition according to any one of Claims 1 to 3, wherein the alicyclic skeleton-containing monofunctional monomer that forms a polymer having a Tg of 10°C to 60°C when polymerized is contained in an amount of 18.0% or more by mass of the total solid content.

5. The active energy ray-curable inkjet ink composition according to any one of Claims 1 to 4, wherein 3-methyl-1,5-pentanediol diacrylate is contained in an amount of 10.0% to 20.0% by mass of the total solid content.

6. The active energy ray-curable inkjet ink composition according to any one of Claims 1 to 5, wherein acryloylmorpholine is contained in an amount of 5.0% to 10.0% by mass of the total solid content.

7. The active energy ray-curable inkjet ink composition according to any one of Claims 1 to 6, wherein the alicyclic skeleton-containing monofunctional monomer that forms a polymer having a Tg of 10°C to 60°C when polymerized is t-butylcyclohexyl acrylate.

8. The active energy ray-curable inkjet ink composition according to any one of Claims 1 to 7, wherein benzyl acrylate, tetrahydrofurfuryl acrylate, and isobornyl acrylate are each contained in an amount of 5.0% or less by mass of the total solid content.

## Patentansprüche

1. Durch aktive Energiestrahlung härtbare Tintenstrahl-Tintenzusammensetzung, welche die folgenden Anforderungen (A) bis (D) erfüllt:
(A) ein aminmodifiziertes Oligomer ist in einer Menge von 1,0 bis 20,0 Masse-% eines Gesamtfeststoffgehalts enthalten,
(B) ein alicyclisches Gerüst enthaltendes monofunktionelles Monomer, das, wenn es polymerisiert wird, ein Polymer mit einer Tg von 10 °C bis 60 °C bildet, ist in einer Menge von 16,0 Masse-% oder mehr des Gesamtfeststoffgehalts enthalten,
(C) 3-Methyl-1,5-pentandioldiacrylat ist in einer Menge von 8,0 bis 25,0 Masse-% des Gesamtfeststoffgehalts enthalten und
(D) Acryloylmorpholin ist in einer Menge von 3,0 bis 15,0 Masse-% des Gesamtfeststoffgehalts enthalten.

2. Durch aktive Energiestrahlung härtbare Tintenstrahl-Tintenzusammensetzung gemäß Anspruch 1, wobei das aminmodifizierte Oligomer in einer Menge von 2,0 bis 15,0 Masse-% des Gesamtfeststoffgehalts enthalten ist.

3. Durch aktive Energiestrahlung härtbare Tintenstrahl-Tintenzusammensetzung gemäß Anspruch 1 oder 2, wobei das aminmodifizierte Oligomer in einer Menge von 4,0 bis 13,0 Masse-% des Gesamtfeststoffgehalts enthalten ist.

4. Durch aktive Energiestrahlung härtbare Tintenstrahl-Tintenzusammensetzung gemäß einem der Ansprüche 1 bis 3, wobei das ein alicyclisches Gerüst enthaltende monofunktionelle Monomer, das, wenn es polymerisiert wird, ein Polymer mit einer Tg von 10 °C bis 60 °C bildet, in einer Menge von 18,0 Masse-% oder mehr des Gesamtfeststoffgehalts enthalten ist.

5. Durch aktive Energiestrahlung härtbare Tintenstrahl-Tintenzusammensetzung gemäß einem der Ansprüche 1 bis **4,** wobei 3-Methyl-1,5-pentandioldiacrylat in einer Menge von 10,0 bis 20,0 Masse-% des Gesamtfeststoffgehalts enthalten ist.

6. Durch aktive Energiestrahlung härtbare Tintenstrahl-Tintenzusammensetzung gemäß einem der Ansprüche 1 bis 5, wobei Acryloylmorpholin in einer Menge von 5,0 bis 10,0 Masse-% des Gesamtfeststoffgehalts enthalten ist.

7. Durch aktive Energiestrahlung härtbare Tintenstrahl-Tintenzusammensetzung gemäß einem der Ansprüche 1 bis 6, wobei das ein alicyclisches Gerüst enthaltende monofunktionelle Monomer, das, wenn es polymerisiert wird, ein Polymer mit einer Tg von 10 °C bis 60 °C bildet, t-Butylcyclohexylacrylat ist.

8. Durch aktive Energiestrahlung härtbare Tintenstrahl-Tintenzusammensetzung gemäß einem der Ansprüche 1 bis 7, wobei Benzylacrylat, Tetrahydrofurfurylacrylat und Isobornylacrylat jeweils in einer Menge von 5,0 Masse-% oder weniger des Gesamtfeststoffgehalts enthalten sind.

## Revendications

1. Composition d'encre pour jet d'encre durcissable par rayonnement d'énergie active, satisfaisant aux exigences (A) à (D) suivantes :
(A) un oligomère modifié par une amine est contenu en une quantité allant de 1,0% à 20,0% en masse de la teneur totale en solides,
(B) un monomère monofonctionnel contenant un squelette alicyclique, qui forme un polymère ayant une Tg de 10°C à 60°C lorsqu'il est polymérisé, est contenu en une quantité supérieure ou égale à 16,0% en masse de la teneur totale en solides,
(C) du diacrylate de 3-méthyl-1,5-pentanediol est contenu en une quantité allant de 8,0% à 25,0% en masse de la teneur totale en solides, et
(D) de l'acryloylmorpholine est contenue en une quantité allant de 3,0% à 15,0% en masse de la teneur totale en solides.

2. Composition d'encre pour jet d'encre durcissable par rayonnement d'énergie active selon la revendication 1, dans laquelle l'oligomère modifié par une amine est contenu en une quantité allant de 2,0% à 15,0% en masse de la teneur totale en solides.

3. Composition d'encre pour jet d'encre durcissable par rayonnement d'énergie active selon la revendication 1 ou 2, dans laquelle l'oligomère modifié par une amine est contenu en une quantité allant de 4,0% à 13,0% en masse de la teneur totale en solides.

4. Composition d'encre pour jet d'encre durcissable par rayonnement d'énergie active selon l'une quelconque des revendications 1 à 3, dans laquelle le monomère monofonctionnel contenant un squelette alicyclique, qui forme un polymère ayant une Tg de 10°C à 60°C lorsqu'il est polymérisé, est contenu en une quantité supérieure ou égale à 18,0% en masse de la teneur totale en solides.

5. Composition d'encre pour jet d'encre durcissable par rayonnement d'énergie active selon l'une quelconque des revendications 1 à 4, dans laquelle le diacrylate de 3-méthyl-1,5-pentanediol est contenu en une quantité allant de 10,0% à 20,0% en masse de la teneur totale en solides.

6. Composition d'encre pour jet d'encre durcissable par rayonnement d'énergie active selon l'une quelconque des revendications 1 à 5, dans laquelle l'acryloylmorpholine est contenue en une quantité allant de 5,0% à 10,0% en masse de la teneur totale en solides.

7. Composition d'encre pour jet d'encre durcissable par rayonnement d'énergie active selon l'une quelconque des revendications 1 à 6, dans laquelle le monomère monofonctionnel contenant un squelette alicyclique, qui forme un polymère ayant une Tg de 10°C à 60°C lorsqu'il est polymérisé, est l'acrylate de t-butylcyclohexyle.

8. Composition d'encre pour jet d'encre durcissable par rayonnement d'énergie active selon l'une quelconque des revendications 1 à 7, dans laquelle l'acrylate de benzyle, l'acrylate de tétrahydrofurfuryle et l'acrylate d'isobornyle sont chacun contenus en une quantité inférieure ou égale à 5,0% en masse de la teneur totale en solides.
